# EUROPEAN PATENT APPLICATION

(11) **EP 4 823 141 A1**
(43) Date of publication of application: **14.10.2026**
(21) Application number: 24899607.6
(22) Date of filing: 19.11.2024
(51) Int. Cl.: H04W 12/086

(54) **IPSEC TUNNEL SHARING METHOD, AND DEVICE AND SYSTEM**

(30) Priority: 04.12.2023 CN 202311650506
(71) Applicant: Huawei Technologies Co., Ltd., Shenzhen, Guangdong 518129 (CN)
(72) Inventor: XUE, Wan, Shenzhen, Guangdong 518129 (CN); HE, Qi, Shenzhen, Guangdong 518129 (CN); LI, Zhengfeng, Shenzhen, Guangdong 518129 (CN); CHEN, Xiaolan, Shenzhen, Guangdong 518129 (CN); DING, Beijing, Shenzhen, Guangdong 518129 (CN)
(74) Representative: Huawei European IPR
(86) International application number: PCT/CN2024/132985
(87) International publication number: WO 2025/118965

(57) **Abstract**

This application discloses an IPsec tunnel sharing method, a device, and a system, relating to the field of communication technologies. By sharing an IPsec tunnel among a plurality of operators or service instances without changing the total quantity of IPsec tunnels, the IPsec tunnel specification during data transmission is improved, transmission efficiency of service data is ensured, and services run more reliably and efficiently. In this application, IPsec tunnel sharing among different operators or service instances is achieved by performing routing transmission and traffic selection on service data. Even when an IPsec tunnel is shared among a plurality of operators, service isolation can still be achieved, thereby ensuring data transmission stability. On this basis, data transmission resources between network devices can be saved, and the data transmission efficiency of a plurality of service instances between the network devices can be improved without changing physical hardware.

## Description

This application claims priority to Chinese Patent Application No. 202311650506.2, filed with the China National Intellectual Property Administration on December 4, 2023 and entitled "IPSEC TUNNEL SHARING METHOD, DEVICE, AND SYSTEM", which is incorporated herein by reference in its entirety.

### TECHNICAL FIELD

This application relates to the field of communication technologies, and in particular, to an IPsec tunnel sharing method, a device, and a system.

### BACKGROUND

Currently, the 3rd Generation Partnership Project (3rd Generation Partnership Project, 3GPP) supports security auto-establishment via an X2/Xn interface, for example, supports direct establishment of an IPsec tunnel (referred to as an IPsec tunnel) between two base stations, such as an Internet protocol security (Internet protocol security, IPsec) tunnel. In a base station scenario with a plurality of service instances, for example, in a scenario in which a base station simultaneously serves a plurality of operators or a plurality of service instances, because transmission isolation and data isolation need to be performed between service instances, different service instances usually use different virtual routing (virtual routing and forwarding, VRF) domains, and different VRFs require independent IPsec tunnels.

However, due to IPsec resource constraints, the quantity of IPsec tunnels that can be established by a base station is usually limited. Based on this, when the IPsec tunnel quantity of the base station is limited, how to increase the quantity of encrypted data flows in an IPsec tunnel in a scenario in which the base station provides services for a plurality of operators or a plurality of service instances is a problem that needs to be resolved.

### SUMMARY

This application provides an IPsec tunnel sharing method, a device, and a system to ensure more reliable and efficient running of services while improving utilization of IPsec tunnels.

To achieve the foregoing objectives, this application uses the following technical solutions.

According to a first aspect, an IPsec tunnel sharing method is provided, and applied to a first network device, where the first network device provides services for a plurality of target objects, the target objects are operators or service instances, the plurality of target objects include a first target object and a second target object, one or more IPsec tunnels are established between the first network device and a second network device, and the method may include:
sending a first data packet and a second data packet to the second network device through a first IPsec tunnel, where the first data packet belongs to the first target object, the second data packet belongs to a second different target object, the first data packet includes first service data and first information, the first information indicates the first target object, the second data packet includes second service data and second information, and the second information indicates the second target object, where the first IPsec tunnel is one of the one or more IPsec tunnels. Based on this, the one or more IPsec tunnels are established between the first network device and the second network device. The one or more IPsec tunnels are used to transmit service data between the first network device and the second network device. Both the first network device and the second network device provide services for the plurality of target objects. The first data packet and the second data packet may come from a same target object or different target objects. The first data packet includes the first service data and the first information. The first service data is service data of the first target object, and the first information indicates that the first service data comes from the first target object. The second data packet includes the second service data and the second information. The second service data is service data of the second target object, and the second information indicates that the second service data comes from the second target object. The target object may be an operator or a service instance. In some examples, the target object may alternatively be another dedicated network. This is not limited herein. For service data of the plurality of target objects served by the first network and the second network, any one of the one or more IPsec tunnels may be used as the first IPsec tunnel to transmit the service data. In this way, the IPsec tunnel between the first network device and the second network device is shared among the plurality of target objects. This improves an available IPsec tunnel specification when the target object performs service data transmission, and improves utilization of the IPsec tunnel between the first network device and the second network device, so that efficiency of service data transmission between the first network device and the second network device is improved.

In a possible implementation, sending the first data packet and the second data packet to the second network device through the first IPsec tunnel includes: separately transmitting the first service data and the second service data to a tunnel interface of the first IPsec tunnel; separately encrypting the first service data and the second service data at the tunnel interface to obtain the first data packet and the second data packet; and sending the first data packet and the second data packet to the second network device through the first IPsec tunnel. Based on this, when service data transmission is performed by using the first IPsec tunnel, the first service data and the second service data are first transmitted to the tunnel interface of the first IPsec tunnel. The first IPsec tunnel may be any one of a plurality of IPsec tunnels. The first service data and the second service data may come from the same target object or different target objects. The first service data and the second service data are separately encapsulated and encrypted at the tunnel interface based on a security protocol policy corresponding to the first IPsec tunnel, to obtain the first data packet and the second data packet. Then the first data packet and the second data packet are sent by using the first IPsec tunnel. In this way, by controlling a transmission mode of the first service data and the second service data, the first IPsec tunnel is shared when the service data from the same target object or different target objects is transmitted. It may be understood that the first IPsec tunnel is any one of the one or more IPsec tunnels between the first network device and the second network device, and the first service data and the second service data may be service data of any different target object served by the first network device.

In a possible implementation, separately transmitting the first service data and the second service data to the tunnel interface of the first IPsec tunnel includes: transmitting the first service data and the second service data to the tunnel interface based on a preset routing mode of inner addresses. Based on this, when the first service data and the second service data are transmitted to the tunnel interface of the first IPsec tunnel, the routing mode may be used to transmit the first service data and the second service data from the same target object or different target objects to the tunnel interface of the first IPsec tunnel, to control a data transmission path of the first service data and the second service data, so as to implement sharing of the IPsec tunnel among different target objects.

In a possible implementation, the preset routing mode of inner addresses includes one or more of the following: destination address-based routing, source address-based routing, and policy-based routing. Based on this, the first service data and the second service data are transmitted from respective inner addresses to the tunnel interface of the first IPsec tunnel in the preset routing mode. For example, a destination address-based routing mode, a source address-based-routing mode, or a policy-based routing mode may be used. The policy-based routing may automatically establish a peer address and transmit the service data to the tunnel interface of the IPsec tunnel based on a combination of a source address and a destination address. In some examples, alternatively, another routing mode that can transmit the service data to the tunnel interface may be used. This is not limited herein.

In a possible implementation, both the first service data and the second service data pass traffic selection of the tunnel interface. Based on this, after the first service data and the second service data are transmitted to the tunnel interface, the traffic selection may be performed on the first service data and the second service data at the tunnel interface, so that both the first service data and the second service data at the tunnel interface pass the traffic selection of the tunnel interface, and encapsulation processing or encryption processing is performed on the first service data and the second service data at the tunnel interface.

In a possible implementation, the tunnel interface includes a traffic selector, and separately encrypting the first service data and the second service data at the tunnel interface includes: performing the traffic selection on the first service data and the second service data at the tunnel interface by using the traffic selector, and when the traffic selection passes, separately performing encryption processing on the first service data and the second service data. Based on this, when the traffic selection is performed at the tunnel interface, the traffic selector may be used to perform the traffic selection on the service data. For example, the traffic selector may be used to perform the traffic selection on the first service data and the second service data. When an inner address of the first service data satisfies a preset address range of the traffic selector, the first service data and the second service data are allowed to pass the traffic selector, and encryption processing is performed on the first service data and the second service data.

In a possible implementation, performing the traffic selection on the first service data and the second service data includes: determining that the inner addresses corresponding to the first service data and the second service data satisfy the preset address range of the traffic selector, and determining that the traffic selection passes. Based on this, the preset address range of the traffic selector may be set based on a transmission requirement of the service data. When the inner addresses corresponding to the first service data and the second service data are within the preset address range of the traffic selector, it is determined that the first service data and the second service data satisfy a traffic selection rule of the traffic selector, and it is determined that the first service data and the second service data pass the traffic selection.

In a possible implementation, performing the traffic selection on the first service data and the second service data by using the traffic selector includes: performing the traffic selection on the first service data and the second service data based on an any-to-any selection policy by using the traffic selector, where an IPv4 address range corresponding to the traffic selector is 0.0.0.0/0 to 0.0.0.0/0, and a corresponding IPv6 address range is ::0/0 to ::0/0. Based on this, in some examples, a selection policy of the traffic selector may be any to any. To be specific, after the first service data and the second service data are transmitted to the tunnel interface in the preset routing mode, the traffic selector may allow both the first service data and the second service data to pass the traffic selection. Both the first service data and the second service data fall within the preset address range of the traffic selector. The address range of the traffic selector in an IPv4 scenario is 0.0.0.0/0 to 0.0.0.0/0. The address range of the traffic selector in an IPv6 scenario is ::0/0 to ::0/0. When the first service data and the second service data fall within the address range, it is determined that the first service data and the second service data pass the traffic selection. To be specific, the traffic selector at the tunnel interface allows all data transmitted to the tunnel interface in the preset routing mode to pass the traffic selection, and the traffic selector cooperates with preset routing to control a transmission process of the service data, to transmit the service data to the corresponding tunnel interface, thereby implementing sharing of the IPsec tunnel between the first network device and the second network device. This improves efficiency of service data transmission.

In a possible implementation, separately performing encryption processing on the first service data and the second service data at the tunnel interface includes: writing a first virtual routing domain identifier corresponding to the first target object into the first information, and then performing encryption processing on the first service data; and writing a second virtual routing domain identifier corresponding to the second target object into the second information, and then performing encryption processing on the second service data. Based on this, in a process of encrypting the first service data and the second service data, for the first service data from the first target object, the first virtual routing domain identifier corresponding to the first target object is written into the first information, and for the second service data from the second target object, the second virtual routing domain identifier corresponding to the second target object is written into the second information, where the first virtual routing domain identifier indicates the first target object, and the second virtual routing domain identifier indicates the second target object.

In a possible implementation, writing the first virtual routing domain identifier corresponding to the first target object into the first information includes: writing, based on a first mapping mechanism, the first virtual routing domain identifier corresponding to the first target object into the first information; and writing the second virtual routing domain identifier corresponding to the second target object into the second information includes: writing, based on a second mapping mechanism, the second virtual routing domain identifier corresponding to the second target object into the second information, where the first mapping mechanism and the second mapping mechanism may be different.

In a possible implementation, the first data packet includes a field for carrying the first information, the second data packet includes a field for carrying the second information, and the field includes one or more of the following: an extension header field, a special field, a reserved field, a TTL field, a flow label field, and a dh header field. Based on this, when the first virtual routing domain identifier is written into the first information and the second virtual routing domain identifier is written into the second information, the first virtual routing domain identifier and the second virtual routing domain identifier may be mapped to the extension header field, the special field, the reserved field, the TTL field, the flow label field, and the dh header field, or another available field in the data packet. This is not limited herein.

In a possible implementation, the first service data includes first address information, the first address information indicates the first target object, the second service data includes second address information, and the second address information indicates the second target object. Based on this, when a target object sends service data, the service data carries address information that may indicate the corresponding target object. In some examples, the first service data may include the first address information, the first address information may indicate source address information and target address information that correspond to the first service data, the second service data may include the second address information, and the second address information may indicate source address information and target address information that correspond to the second service data, so that the first target object and the second target object that correspond to the first service data and the second service data are determined.

According to a second aspect, an IPsec tunnel sharing method is provided, and applied to a second network device, where the second network device provides services for a plurality of target objects, the target objects are operators or service instances, the plurality of target objects include a first target object and a second target object, one or more IPsec tunnels are established between the second network device and a first network device, and the method may include:

First, receiving a first data packet and a second data packet that are sent by the first network device through a first IPsec tunnel, where the first data packet includes first service data and first information, the first information indicates the first target object, the second data packet includes second service data and second information, and the second information indicates the second target object. Based on this, the one or more IPsec tunnels are established between the first network device and the second network device. The one or more IPsec tunnels are used to transmit service data between the first network device and the second network device. Both the first network device and the second network device provide services for the plurality of target objects. The second network device receives the first data packet and the second data packet from the first network device, where the first data packet and the second data packet may come from a same target object or different target objects, and the target object may be an operator or a service instance, or may be another dedicated network in some examples. This is not limited herein.

Then, obtaining the first service data and the first information from the first data packet, and obtaining the second service data and the second information from the second data packet. Based on this, the first service data and the first information are obtained from the first data packet, where the first information indicates that the first service data belongs to the first target object; and the second service data and the second information are obtained from the second data packet, where the second information indicates that the second service data comes from the second target object. In this way, a target object to which a data packet belongs can be determined by using the first information or the second information carried in the data packet, so that the second network device receives and identifies the first service data and the second service data, thereby implementing reception of the first service data and the second service data.

In a possible implementation, obtaining the first service data and the first information from the first data packet includes: parsing the first data packet based on a security protocol policy corresponding to the first IPsec tunnel, to obtain the first service data and the first information; and obtaining the second service data and the second information from the second data packet includes: parsing the second data packet based on the security protocol policy corresponding to the first IPsec tunnel, to obtain the second service data and the second information. Based on this, both the first data packet and the second data packet received by the second network device from the first IPsec tunnel are decrypted based on the security protocol policy corresponding to the first IPsec tunnel, to obtain the corresponding first service data, first information, second service data, and second information. A corresponding security protocol policy may be set for an IPsec tunnel through configuration, so that the security protocol policy is used when service data transmitted through the IPsec tunnel is encrypted.

In a possible implementation, the method may further include: obtaining, based on a third mapping mechanism, a first virtual routing domain identifier corresponding to the first information, where the first information is encapsulated into the first data packet by the first network device based on a first mapping mechanism; and obtaining, based on a fourth mapping mechanism, a second virtual routing domain identifier corresponding to the second information, where the second information is encapsulated into the second data packet by the first network device based on the first mapping mechanism, where the third mapping mechanism and the fourth mapping mechanism may be the same or different. Based on this, when the corresponding first virtual routing domain identifier is obtained based on the first information, the third mapping mechanism may be used to obtain the first virtual routing domain identifier from a field for carrying the first information; and when the corresponding second virtual routing domain identifier is obtained based on the second information, the fourth mapping mechanism may be used to obtain the second virtual routing domain identifier from a field for carrying the second information. The third mapping mechanism and the fourth mapping mechanism may be the same or different, the third mapping mechanism and the first mapping mechanism may be the same or different, the fourth mapping mechanism and the second mapping mechanism may be the same or different, and a specific mapping rule may be determined through negotiation between the first network device and the second network device.

In a possible implementation method, the first data packet and the second data packet include one or more of the following fields: an extension header field, a special field, a reserved field, a TTL field, a flow label field, and a dh header field, and the first information is located in the field. Based on this, when the corresponding first virtual routing domain identifier is obtained based on the first information, and the corresponding second virtual routing domain identifier is obtained based on the second information, the first virtual routing domain identifier carried in the first information and the second virtual routing domain identifier carried in the second information may be obtained from fields such as the extension header field, the special field, the reserved field, the TTL field, the flow label field, and the dh header, or may be obtained from other available fields in the data packet. This is not limited herein.

In a possible implementation, the method may further include: transmitting, based on the first virtual routing domain identifier, the first service data to the first target object served by the second network device, where an association relationship exists between the first virtual routing domain identifier and the first target object; and transmitting, based on the second virtual routing domain identifier, the second service data to the second target object served by the second network device, where an association relationship exists between the second virtual routing domain identifier and the second target object. Based on this, it may be understood that, an association relationship exists between the first virtual routing domain identifier and the first target object, and an association relationship exists between the second virtual routing domain identifier and the second target object. Therefore, based on the first virtual routing domain identifier and the association relationship between the first virtual routing domain identifier and the first target object, the first service data may be sent to the first target object served by the second network device, and based on the second virtual routing domain identifier and the association relationship between the second virtual routing domain identifier and the second target object, the second service data may be sent to the second target object served by the second network device, so that reception of the first service data and the second service data is completed.

In a possible implementation, the first service data includes first address information, the first address information indicates the first target object, the second service data includes second address information, and the second address information indicates the second target object. Based on this, after service data is obtained, the service data carries address information that may indicate a corresponding target object. In some examples, the first service data may include the first address information, the first address information may indicate target address information corresponding to the first service data, the second service data may include the second address information, and the second address information may indicate target address information corresponding to the second service data. The first target object and the second target object that correspond to the first service data and the second service data may be determined based on the target address information.

In a possible implementation, the method further includes: transmitting, based on the first address information, the first service data to the first target object served by the second network device; and transmitting, based on the second address information, the second service data to the second target object served by the second network device. Based on this, address information may include source address information and target address information. In some examples, a target object corresponding to service data may be determined by obtaining the target address information in the address information. For example, the first target object corresponding to the first service data may be determined based on the target address information in the first address information, and the first service data is sent to the first target object; and the second target object corresponding to the second service data may be determined based on the target address information in the second address information, and the second service data is sent to the second target object, so that reception of the first service data and the second service data is completed.

According to a third aspect, a communication system is provided, where the communication system may include a first network device and a second network device, the first network device is configured to implement the method according to any one of the first aspect, and the second network device is configured to implement the method according to any one of the second aspect.

According to a fourth aspect, an electronic device is provided, where the electronic device may include: a transceiver, configured to send and receive signals; a memory, configured to store computer program instructions; and a processor, configured to execute the computer program instructions, to support the electronic device in implementing the method according to any one of the first aspect or the second aspect or possible implementations thereof.

According to a fifth aspect, a computer-readable storage medium is provided, where the computer-readable storage medium stores computer program instructions, and when the computer program instructions are executed by a processing circuit, the method according to any one of the first aspect or the second aspect or possible implementations thereof is implemented.

According to a sixth aspect, a computer program product including instructions is provided, where when the computer program product runs on a computer, the computer is enabled to perform the method according to any one of the first aspect or the second aspect or possible implementations thereof.

According to a seventh aspect, a chip system is provided, where the chip system includes a processing circuit and a storage medium, the storage medium stores computer program instructions, and when the computer program instructions are executed by the processing circuit, the method according to any one of the first aspect or the second aspect or possible implementations thereof is implemented.

### BRIEF DESCRIPTION OF DRAWINGS

FIG. 1 is a diagram of data transmission based on an IPsec tunnel according to a related technology;
FIG. 2 is a diagram of a system architecture according to a related technology;
FIG. 3 is a diagram of another system architecture according to a related technology;
FIG. 4 is a diagram of data transmission based on an IPsec tunnel according to an embodiment of this application;
FIG. 5 is a diagram of a hardware structure of a network device according to an embodiment of this application;
FIG. 6 is a diagram of a system architecture according to an embodiment of this application;
FIG. 7 is a diagram of another system architecture according to an embodiment of this application;
FIG. 8 is a schematic flowchart of an IPsec tunnel sharing method according to an embodiment of this application;
FIG. 9 is a diagram of data transmission based on policy-based routing according to an embodiment of this application;
FIG. 10 is a diagram of a data packet in a data transmission process of an IPsec tunnel according to an embodiment of this application;
FIG. 11 is a diagram illustrating a principle of an indication manner of a virtual routing domain according to an embodiment of this application;
FIG. 12 is a diagram illustrating a principle of another indication manner of a virtual routing domain according to an embodiment of this application; and
FIG. 13 is a detailed schematic flowchart of an IPsec tunnel sharing method according to an embodiment of this application.

### DESCRIPTION OF EMBODIMENTS

The following describes the technical solutions in embodiments of this application with reference to the accompanying drawings in embodiments of this application. In descriptions of embodiments of this application, unless otherwise specified, "/" means "or". For example, A/B may represent A or B. In this specification, "and/or" describes only an association relationship between associated objects and indicates that three relationships may exist. For example, A and/or B may represent the following three cases: Only A exists, both A and B exist, and only B exists. In addition, in the descriptions of embodiments of this application, the term "a plurality of" means two or more.

The following terms "first", "second", and the like are merely intended to distinguish between different described objects, and impose no limitation on positions, sequences, priorities, quantities, content, or the like of the described objects. For example, if a described object is a "field", ordinal numbers before "fields" in a "first field" and a "second field" do not limit positions or an order between the "fields". The "first" and the "second" do not limit whether the "fields" modified by the "first" and "second" are in a same message, and the "first" and the "second" do not limit a sequence of the "first field" and the "second field". For another example, if a described object is a "level", ordinal numbers before "levels" in a "first level" and a "second level" do not limit a priority between the "levels". For another example, a quantity of described objects is not limited by an ordinal number, and may be one or more objects. For example, for a "first device", a quantity of "devices" may be one or more. In addition, objects modified by different prefixes may be the same or different. For example, if a described object is a "device", a "first device" and a "second device" may be devices of a same type or different types. For another example, if a described object is "information", "first information" and "second information" may be information with same content or information with different content. In conclusion, in embodiments of this application, use of prefix words such as ordinal numbers for distinguishing between the described objects constitutes no limitation on the described objects. For descriptions of the described objects, refer to contextual descriptions in claims or embodiments. Use of the prefix words shall not constitute an undue limitation.

In addition, in embodiments of this application, the term "connection" may indicate a direct connection or an indirect connection, or may indicate an electrical connection or a communication connection. For example, a connection between two electrical elements A and B may mean that A is directly connected to B, or may mean that A is indirectly connected to B via another electrical element or a connection medium, or may mean that A is indirectly connected to B via another communication device or a communication medium, provided that A and B can communicate with each other.

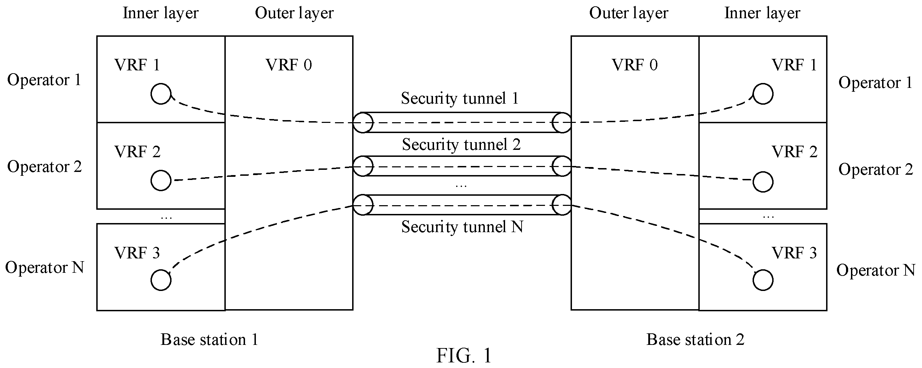

Currently, a radio base station application scenario already supports security auto-establishment via an X2/Xn interface (for example, an X2/Xn IPsec tunnel is directly established between two base stations), where X2 is an interface between LTE sites, and Xn is an interface between NR sites. This mode is referred to as a direct security protocol (Direct IPsec). The direct security protocol does not support IPsec tunnel sharing between base stations. Therefore, to avoid a problem that a plurality of operators or a plurality of service instances cannot be isolated or distinguished when an address conflict exists between the plurality of operators or the plurality of service instances (the address conflict is a common scenario), each operator or service instance requires an independent direct IPsec tunnel for support. In other words, one direct IPsec tunnel cannot be reused or shared by the plurality of operators or service instances. In this case, as shown in FIG. 1, if there are N (N is a positive integer greater than 1) inner VRFs, N local Internet key exchange protocol (Internet Key Exchange, IKE) addresses and N direct IPsec tunnels need to be provided between a base station 1 and a base station 2. Operators may be virtual routing (virtual routing and forwarding, VRF) domains shown in FIG. 1, and for example, may include a VRF 1, a VRF 2, and a VRF 3. In some cases, an operator or a service instance may also be referred to as a "VRF instance". The VRF is an instance created on a physical device and obtained by logically dividing the physical device. The instances are isolated from each other on a routing plane. Based on this, data or services can be isolated. Each VRF has an independent interface, a routing table, a routing protocol process, and the like. In other words, the current protocol does not support sharing of an IPsec tunnel between base stations in terms of protocol functions or a specified communication process.

Further, due to an IPsec resource limitation, each base station generally has a specification limitation, for example, 512 direct IPsec tunnels. However, in a multi-operator scenario, transmission isolation is required between operators (for example, independent planning of transmission IP addresses and routes, and data isolation between operators), and different VRFs are generally used. The VRF of each operator requires an independent direct IPsec tunnel. However, if a total direct IPsec tunnel specification of a base station remains unchanged, a quantity of direct IPsec tunnels that can be used by each operator is reduced by N times, where N is a quantity of operators. In the multi-operator scenario, if the quantity of operators is 3 and each operator requires more than 500 direct IPsec tunnels, the total direct IPsec tunnel specification required is more than 1500. However, the direct IPsec tunnel specification of the base station is 512, which cannot meet requirements of the operators.

In another aspect, in a scenario in which enterprise-orientated (to business, 2B) and customer-oriented (to customer, 2C) services are mixed, 2B and 2C also require independent planning of transmission isolation and data isolation and use different VRFs. As a result, an inter-site direct IPsec tunnel specification needs to be increased by N times, where N is a quantity of slices. As a result, the base station cannot meet requirements of the scenario.

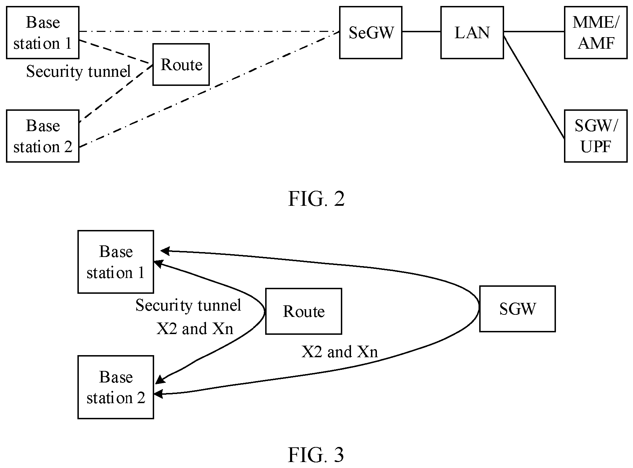

In a radio base station application scenario, as shown in FIG. 2, secure communication between a base station and a core network may be implemented by establishing a security protocol channel between the base station and a security gateway (security gateway, SeGW), to carry a coordinated service between base stations. The core network may include a local area network (local area network, LAN), an SeGW, a mobility management entity (mobility management entity, MME) or an authentication management function (authentication management function, AMF), a signaling gateway (signaling gateway, SGW) or a user plane function (user plane function, UPF), and the like shown in FIG. 2.

To reduce traffic load of the security gateway and latency between base stations, an IPsec tunnel may be directly established between base stations, for example, a direct IPsec tunnel (referred to as "an IPsec tunnel"). As shown in FIG. 2, secure transmission between a base station 1 and a base station 2 may be implemented by using a security protocol channel between the base station and the security gateway (SeGW) of the core network, or by using an IPsec tunnel between the base station 1 and the base station 2. Specifically, as shown in FIG. 3, in some scenarios, when an IPsec tunnel specification is exceeded, remaining X2/Xn data, excluding that transmitted through IPsec, is forwarded by a security gateway, resulting in reduction of a data transmission speed.

In a multi-operator base station scenario, for example, in a scenario in which a base station simultaneously serves a plurality of operators, that is, in a RAN sharing scenario in which a plurality of operators share a same base station, different operators usually use different VRF s because transmission isolation and data isolation are required between the operators. Different VRFs require independent IPsec tunnels. To implement transmission isolation and data isolation between operators, assuming that a base station 1 and a base station 2 provide services for four operators, four inter-site IPsec tunnels need to be established between the base station 1 and the base station 2 based on an operator granularity. Similarly, a plurality of IPsec tunnels also need to be established between the base station 1 and another base station, and a plurality of IPsec tunnels also need to be established between the base station 2 and another base station, to meet isolation between different operators.

It is known that IPsec resources are limited. For example, IPsec board hardware is limited. In some examples, an IPsec tunnel specification of an entire board is 512, that is, a base station may have 512 neighboring base stations. If a conventional inter-site IPsec tunnel establishment mechanism is used, assuming that a base station 1 has four operators, and four IPsec tunnels are established between the base station 1 and each of other base stations, the base station 1 needs to establish a total of 512 x 4 = 2048 IPsec tunnels with the other base stations. Therefore, the conventional inter-site IPsec tunnel establishment mechanism causes a sharp increase in the inter-site IPsec tunnel specification. An essence of this problem is that an IPsec tunnel cannot be shared among all operators as a common channel, which greatly wastes base station resources. In other words, a key to resolving the problem of the sharp increase in the IPsec tunnel specification is to improve utilization of the IPsec tunnel by sharing the IPsec tunnel when an IPsec tunnel quantity specification of the base station is limited. A key to establishing the IPsec tunnel is to negotiate a security parameter used to protect the IPsec tunnel and a security parameter used to protect service data.

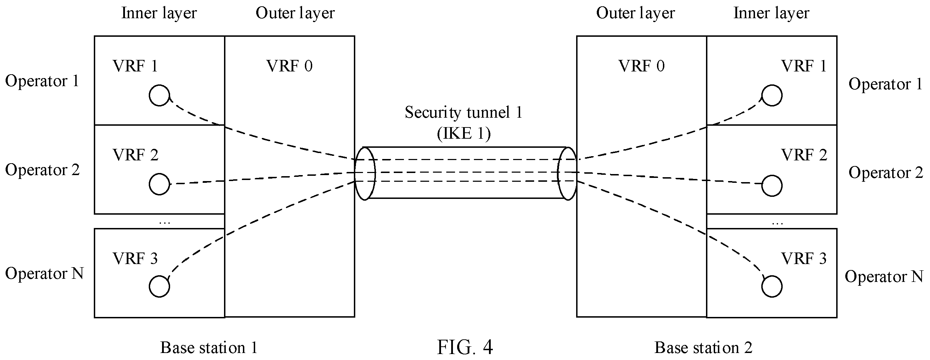

To resolve a problem in a conventional technology that an inter-site IPsec tunnel specification in a network sharply increases, embodiments of this application provide an IPsec tunnel sharing method. The method may support a plurality of operators in sharing one or more IPsec tunnels between network devices, and the plurality of IPsec tunnels are available to any operator served by a first network device and a second network device. As shown in FIG. 4, data of any operator between a base station 1 and a base station 2 may be transmitted by using an IPsec tunnel 1, and security protection such as encryption is provided by an IKE 1 for the IPsec tunnel 1. In other words, regardless of whether any operator served by the first network device and the second network device has a data transmission requirement, the first network device may complete data transmission by using any IPsec tunnel between the first network device and the second network device. Based on this, the problem of the sharp increase in the inter-site IPsec tunnel specification can be resolved, resources such as system computing resources, storage resources, and IP address resources can be saved, operation and maintenance costs of customers can be reduced, utilization of IPsec tunnels can be improved, and reliable and efficient service running can be ensured.

It may be understood that, in some scenarios, an operator or a service instance may alternatively be a VPN instance.

The network devices in embodiments of this application may be base stations in the foregoing examples, for example, a macro base station, a micro base station (also referred to as a "small cell"), and a distributed unit-control unit (distributed unit-control unit, DU-CU). The DU-CU is a device deployed in a radio access network and capable of performing wireless communication with a terminal device. In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like.

In some examples, the base station may be a gNB or a transmission/reception point (transmission/reception point, TRP). Alternatively, the base station may be a base station defined by the 3rd Generation Partnership Project (3rd Generation Partnership Project, 3GPP), for example, an eNB or an e-NodeB.

In addition, when the eNB is connected to an NR core network, a next generation core (next generation core, NGC), or a 5G core network (5th generation core network, 5GC), the eNB may also be referred to as an eLTE eNB. Specifically, the eLTE eNB is an LTE base station device evolved based on the eNB, and may be directly connected to the 5G CN. The eLTE eNB is also a base station device in NR.

In some examples, the network devices in embodiments of this application may further include network devices of other types, with other functions, and with other structures, for example, a wireless terminal (wireless terminal, WT), an access point (access point, AP), an access controller (access controller, AC), or other network devices capable of communicating with a terminal device and a core network. This is not specifically limited in embodiments of this application.

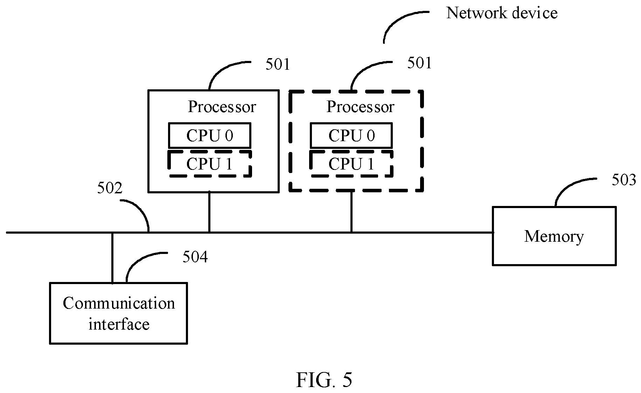

FIG. 5 is a diagram of a hardware structure of a network device. As shown in FIG. 5, the network device may include a processor 501, a communication line 502, a memory 503, and at least one communication interface (a communication interface 504 included in FIG. 5 is used merely as an example for description).

The processor 501 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 502 may include a path on which information is transmitted between the foregoing components.

The communication interface 504 uses any apparatus such as a transceiver, and is configured to communicate with another device or a communication network, for example, an Ethernet, a RAN, or a WLAN.

In this embodiment of this application, the communication line 502 and the communication interface 504 may be configured to support transmission of service data corresponding to an operator or a service instance between the network device and another network device (for example, a first network device and a second network device).

The memory 503 may be a read-only memory (read-only memory, ROM) or another type of static storage device that can store static information and instructions, or a random access memory (random access memory, RAM) or another type of dynamic storage device that can store information and instructions. The memory 503 may alternatively be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the communication line 502. Alternatively, the memory may be integrated with the processor.

The memory 503 is configured to store computer-executable instructions for performing the solutions in this application. The memory 503 can store instructions for implementing two modular functions: a sending instruction, a receiving instruction, and a processing instruction, and the processor 501 controls execution of the instructions. The processor 501 is configured to execute the computer-executable instructions stored in the memory 503, to implement a method provided in the following embodiments of this application. The memory 503 shown in FIG. 5 is merely illustrative. The memory may further include another functional instruction. This is not limited in the present invention.

Optionally, the computer-executable instructions in this application may also be referred to as application program code. This is not specifically limited in this application.

In a specific implementation, in an embodiment, the processor 501 may include one or more CPUs, for example, a CPU 0 and a CPU 1 in FIG. 5.

It may be understood that FIG. 5 is merely an example of the network device, and does not limit a specific structure of the network device. For example, the network device may further include another functional module.

The following describes, in detail with reference to the accompanying drawings, an IPsec tunnel sharing method provided in an embodiment of this application.

In this embodiment of this application, inner-layer data of a plurality of operators or a plurality of service instances shares one IPsec tunnel, and a same IPsec SA is used, to implement a case in which physical hardware remains unchanged. In a scenario of a plurality of operators or a plurality of service instances, an IPsec tunnel specification of each operator or service instance is not reduced.

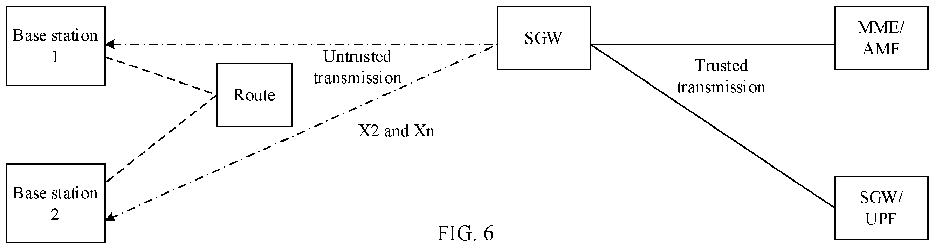

In some examples, FIG. 6 is a diagram of a system architecture according to an embodiment of this application. As shown in FIG. 6, in a radio base station application scenario, secure communication between a base station and a core network may be implemented by establishing a security protocol channel between the base station and a security gateway, to carry a coordinated service between base stations. The core network may include an MME/AMF, an SGW/UPF, and the like.

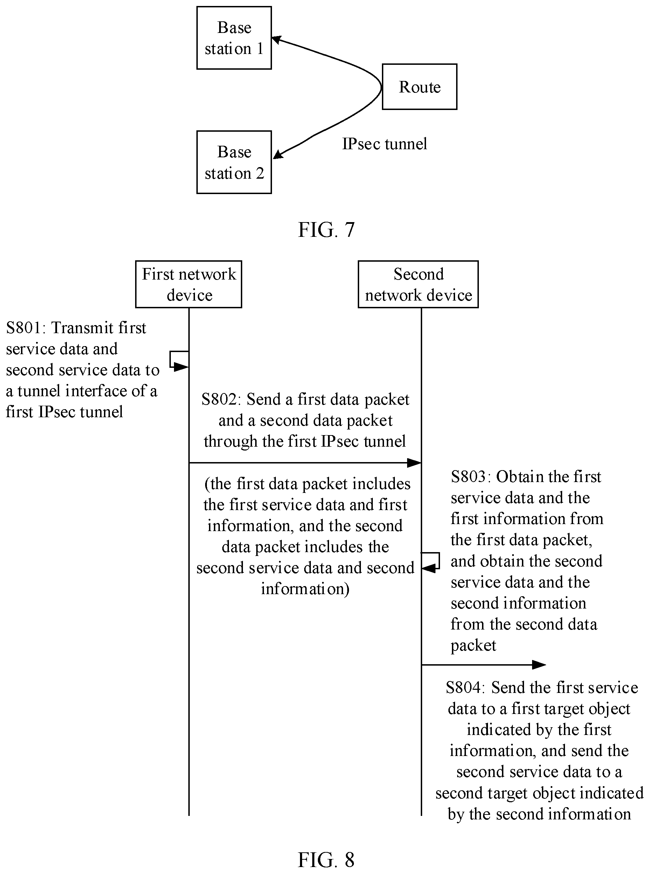

To reduce traffic load of the security gateway and reduce latency between the base stations, an IPsec tunnel may be directly established between the base stations. As shown in FIG. 6, in addition to secure transmission between a base station 1 and a base station 2, a security protocol channel between the base station and the security gateway (SGW) of the core network may be used. In some scenarios, as shown in FIG. 7, the base station 1 and the base station 2 may directly perform data transmission by using an IPsec tunnel.

In some embodiments, this application provides an IPsec tunnel sharing method, applied to a first network device, where the first network device provides services for a plurality of target objects, the target objects are operators or service instances, the plurality of target objects include a first target object and a second target object, and one or more IPsec tunnels are established between the first network device and a second network device. When the first network device serves as a transmit end, the method may include:
sending a first data packet and a second data packet to the second network device through a first IPsec tunnel, where the first data packet belongs to the first target object, the second data packet belongs to a second different target object, the first data packet includes first service data and first information, the first information indicates the first target object, the second data packet includes second service data and second information, and the second information indicates the second target object, where the first IPsec tunnel is one of the one or more IPsec tunnels.

It may be understood that the one or more IPsec tunnels are established between the first network device and the second network device. The one or more IPsec tunnels are used to transmit service data between the first network device and the second network device. Both the first network device and the second network device provide services for the plurality of target objects. The first data packet and the second data packet may come from a same target object or different target objects. The first data packet includes the first service data and the first information. The first service data is service data of the first target object, and the first information indicates that the first service data comes from the first target object. The second data packet includes the second service data and the second information. The second service data is service data of the second target object, and the second information indicates that the second service data comes from the second target object. The target object may be an operator or a service instance. In some examples, the target object may alternatively be another dedicated network. This is not limited herein. For service data of the plurality of target objects served by the first network and the second network, any one of the one or more IPsec tunnels may be used as the first IPsec tunnel to transmit the service data. In this way, the IPsec tunnel between the first network device and the second network device is shared among the plurality of target objects. This improves an available IPsec tunnel specification when the target object performs service data transmission, and improves utilization of the IPsec tunnel between the first network device and the second network device, so that efficiency of service data transmission between the first network device and the second network device is improved.

In some examples, sending the first data packet and the second data packet to the second network device through the first IPsec tunnel includes: separately transmitting the first service data and the second service data to a tunnel interface of the first IPsec tunnel; separately encrypting the first service data and the second service data at the tunnel interface to obtain the first data packet and the second data packet; and sending the first data packet and the second data packet to the second network device through the first IPsec tunnel.

In some examples, when service data transmission is performed by using the first IPsec tunnel, the first service data and the second service data are first transmitted to the tunnel interface of the first IPsec tunnel. The first IPsec tunnel may be any one of a plurality of IPsec tunnels. The first service data and the second service data may come from the same target object or different target objects. The first service data and the second service data are separately encapsulated and encrypted at the tunnel interface based on a security protocol policy corresponding to the first IPsec tunnel, to obtain the first data packet and the second data packet. Then the first data packet and the second data packet are sent by using the first IPsec tunnel. In this way, by controlling a transmission mode of the first service data and the second service data, the first IPsec tunnel is shared when the service data from the same target object or different target objects is transmitted. It may be understood that the first IPsec tunnel is any one of the one or more IPsec tunnels between the first network device and the second network device, and the first service data and the second service data may be service data of any different target object served by the first network device.

In some examples, FIG. 8 is a schematic flowchart of an IPsec tunnel sharing method according to an embodiment of this application. As shown in FIG. 8, based on a first network device, the method may include the following steps.

S801: Transmit first service data and second service data to a tunnel interface of a first IPsec tunnel.

It may be understood that separately transmitting the first service data and the second service data to the tunnel interface of the first IPsec tunnel may include: transmitting the first service data and the second service data to the tunnel interface based on a preset routing mode of inner addresses. When the first service data and the second service data are transmitted to the tunnel interface of the first IPsec tunnel, the routing mode may be used to transmit the first service data and the second service data from a same target object or different target objects to the tunnel interface of the first IPsec tunnel, to control a data transmission path of the first service data and the second service data, so as to implement sharing of the IPsec tunnel among different target objects.

In some examples, the preset routing mode of inner addresses includes one or more of the following: destination address-based routing, source address-based routing, and policy-based routing. The first service data and the second service data are transmitted from respective inner addresses to the tunnel interface of the first IPsec tunnel in the preset routing mode. For example, a destination address-based routing mode, a source address-based routing mode, or a policy-based routing mode may be used. In some examples, alternatively, another routing mode that can transmit the service data to the tunnel interface may be used. This is not limited herein. The destination address-based routing may be routing and transmitting the service data based on an address of a second network device to which the service data needs to be transmitted. The source address-based routing may be routing and transmitting the service data based on an address of the first network device that sends the service data. The policy-based routing may be transmitting the service data based on a combination of a source address and a destination route, where a router matches the source address and the destination address of the service data to route and transmit the service data. A transmission path of the service data is controlled by using one or more of the foregoing routing methods, so that the service data is transmitted to the tunnel interface of the corresponding first IPsec tunnel.

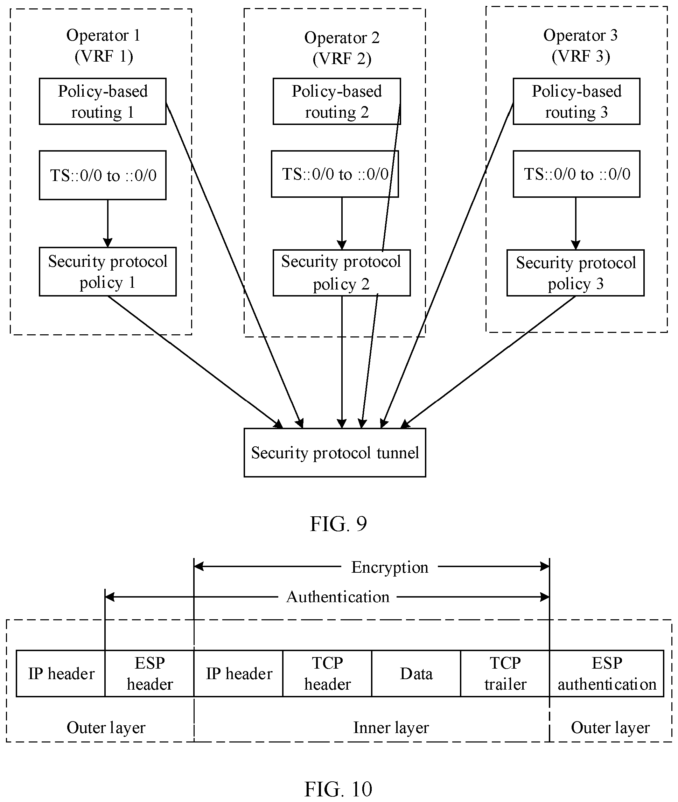

In some examples, FIG. 9 is a diagram of data transmission based on policy-based routing according to an embodiment of this application. As shown in FIG. 9, a first network device may include a plurality of operators or a plurality of service instances. For example, the first network device may include an operator 1 (VRF 1), an operator 2 (VRF 2), and an operator 3 (VRF 3). The plurality of operators correspond to respective policy-based routing modes. For example, the operator 1 corresponds to policy-based routing 1, the operator 2 corresponds to policy-based routing 2, and the operator 3 corresponds to policy-based routing 3. For the three operators in the first network device, all service data may pass a traffic selector (traffic selector, TS). Correspondingly, when the service data arrives at an IPsec tunnel interface, encryption processing further needs to be performed based on a protocol security policy corresponding to an IPsec tunnel, to obtain a corresponding data packet, and the service data is finally sent to a second network device in a form of a data packet by using the IPsec tunnel. There may be one or more IPsec tunnels between the first network device and the second network device.

In some examples, FIG. 10 is a diagram of a data packet in a data transmission process of an IPsec tunnel according to an embodiment of this application. As shown in FIG. 10, an AH or ESP authentication mode may be used to encapsulate an IPsec tunnel header before an original IP packet. For example, ESP authentication may be used. Inner-layer data is an original IP packet, and may include an IP header, a TCP header, data, a TCP trailer, and the like. An outer layer is an IPsec-added tunnel header, and may include an IP header, an ESP header, and the like.

In some examples, after sending the first service data and the second service data to the tunnel interface of the IPsec tunnel, the method may further include: separately encrypting the first service data and the second service data at the tunnel interface to obtain a first data packet and a second data packet.

In some examples, both the first service data and the second service data pass traffic selection of the tunnel interface. After the first service data and the second service data are transmitted to the tunnel interface, the traffic selection may be performed on the first service data and the second service data at the tunnel interface, so that both the first service data and the second service data at the tunnel interface pass the traffic selection of the tunnel interface, and encapsulation processing or encryption processing is performed on the first service data and the second service data at the tunnel interface.

In some examples, the tunnel interface includes a traffic selector, and separately encrypting the first service data and the second service data at the tunnel interface includes: performing the traffic selection on the first service data and the second service data at the tunnel interface by using the traffic selector, and when the traffic selection passes, separately performing encryption processing on the first service data and the second service data. When the traffic selection is performed at the tunnel interface, the traffic selector may be used to perform the traffic selection on the service data. For example, the traffic selector may be used to perform the traffic selection on the first service data and the second service data. When an inner address of the first service data satisfies a preset address range of the traffic selector, the first service data and the second service data are allowed to pass the traffic selector, and encryption processing is performed on the first service data and the second service data.

In some examples, performing the traffic selection on the first service data and the second service data includes: determining that the inner addresses corresponding to the first service data and the second service data satisfy the preset address range of the traffic selector, and determining that the traffic selection passes. The preset address range of the traffic selector may be set based on a transmission requirement of the service data. When the inner addresses corresponding to the first service data and the second service data are within the preset address range of the traffic selector, it is determined that the first service data and the second service data satisfy a traffic selection rule of the traffic selector, and it is determined that the first service data and the second service data pass the traffic selection.

In some examples, performing the traffic selection on the first service data and the second service data by using the traffic selector includes: performing the traffic selection on the first service data and the second service data based on an any-to-any selection policy by using the traffic selector, where an IPv4 address range corresponding to the traffic selector is 0.0.0.0/0 to 0.0.0.0/0, and a corresponding IPv6 address range is ::0/0 to ::0/0. In some examples, a selection policy of the traffic selector may be any to any. To be specific, after the first service data and the second service data are transmitted to the tunnel interface in the preset routing mode, the traffic selector may allow both the first service data and the second service data to pass the traffic selection. Both the first service data and the second service data fall within the preset address range of the traffic selector. The address range of the traffic selector in an IPv4 scenario is 0.0.0.0/0 to 0.0.0.0/0. The address range of the traffic selector in an IPv6 scenario is ::0/0 to ::0/0. When the first service data and the second service data fall within the address range, it is determined that the first service data and the second service data pass the traffic selection. To be specific, the traffic selector at the tunnel interface allows all data transmitted to the tunnel interface in the preset routing mode to pass the traffic selection, and the traffic selector cooperates with preset routing to control a transmission process of the service data, to transmit the service data to the corresponding tunnel interface, thereby implementing sharing of the IPsec tunnel between the first network device and the second network device. This improves efficiency of service data transmission.

In some examples, separately performing encryption processing on the first service data and the second service data at the tunnel interface includes: writing a first virtual routing domain identifier corresponding to a first target object into first information, and then performing encryption processing on the first service data; and writing a second virtual routing domain identifier corresponding to a second target object into second information, and then performing encryption processing on the second service data. In a process of encrypting the first service data and the second service data, for the first service data from the first target object, the first virtual routing domain identifier corresponding to the first target object is written into the first information, and for the second service data from the second target object, the second virtual routing domain identifier corresponding to the second target object is written into the second information, where the first virtual routing domain identifier indicates the first target object, and the second virtual routing domain identifier indicates the second target object.

In some examples, writing the first virtual routing domain identifier corresponding to the first target object into the first information includes: writing, based on a first mapping mechanism, the first virtual routing domain identifier corresponding to the first target object into the first information; and writing the second virtual routing domain identifier corresponding to the second target object into the second information includes: writing, based on a second mapping mechanism, the second virtual routing domain identifier corresponding to the second target object into the second information, where the first mapping mechanism and the second mapping mechanism may be the same or different. When the first virtual routing domain identifier is written into the first information, the first mapping mechanism may be used to map the first virtual routing domain identifier to a field for carrying the first information, and the second mapping mechanism may be used to map the second virtual routing domain identifier to a field for carrying the second information. A specific mapping rule may be negotiated between the first network device and the second network device. In some examples, the first mapping mechanism and the second mapping mechanism may be the same. In some other examples, the first mapping mechanism and the second mapping mechanism may be different.

In some examples, the first data packet includes a field for carrying the first information, the second data packet includes a field for carrying the second information, and the field includes one or more of the following: an extension header field, a special field, a reserved field, a TTL field, a flow label field, and a dh header field. When the first virtual routing domain identifier is written into the first information and the second virtual routing domain identifier is written into the second information, the first virtual routing domain identifier and the second virtual routing domain identifier may be mapped to the extension header field, the special field, the reserved field, the TTL field, the flow label field, and the dh header field, or another available field in the data packet. This is not limited herein.

In some examples, the first service data includes first address information, the first address information indicates the first target object, the second service data includes second address information, and the second address information indicates the second target object. When a target object sends service data, the service data carries address information that may indicate the corresponding target object. In some examples, the first service data may include the first address information, the first address information may indicate source address information and target address information that correspond to the first service data, the second service data may include the second address information, and the second address information may indicate source address information and target address information that correspond to the second service data, so that the first target object and the second target object that correspond to the first service data and the second service data are determined.

S802: Send the first data packet and the second data packet through the first IPsec tunnel (the first data packet includes the first service data and the first information, and the second data packet includes the second service data and the second information).

It may be understood that the first IPsec tunnel is any one of one or more IPsec tunnels between the first network device and the second network device, where the first data packet includes the first service data and the first information, the second data packet includes the second service data and the second information, and the first service data and the second service data may come from any one of target objects served by the first network device. In other words, all of a plurality of target objects served by the first network device may use any IPsec tunnel between the first network device and the second network device to transmit service data. In this way, IPsec tunnels can be shared among different target objects.

In some examples, the method shown in FIG. 8 is applied to the second network device, where the second network device provides services for a plurality of target objects, the target objects are operators or service instances, the plurality of target objects include the first target object and the second target object, and one or more IPsec tunnels are established between the second network device and the first network device. When the second network device serves as a receive end, the method may include the following steps.

S803: Obtain the first service data and the first information from the first data packet, and obtain the second service data and the second information from the second data packet.

It may be understood that the first data packet and the second data packet that are sent by the first network device through the first IPsec tunnel are received, where the first data packet includes the first service data and the first information, the first information indicates the first target object, the second data packet includes the second service data and the second information, and the second information indicates the second target object. The one or more IPsec tunnels are established between the first network device and the second network device. The one or more IPsec tunnels are used to transmit service data between the first network device and the second network device. Both the first network device and the second network device provide services for the plurality of target objects. The second network device receives the first data packet and the second data packet from the first network device, where the first data packet and the second data packet may come from a same target object or different target objects, and the target object may be an operator or a service instance, or may be another dedicated network in some examples. This is not limited herein.

In some examples, the first service data and the first information are obtained from the first data packet, and the second service data and the second information are obtained from the second data packet. The first service data and the first information are obtained from the first data packet, where the first information indicates that the first service data belongs to the first target object; and the second service data and the second information are obtained from the second data packet, where the second information indicates that the second service data comes from the second target object. In this way, a target object to which a data packet belongs can be determined by using the first information or the second information carried in the data packet, so that the second network device receives and identifies the first service data and the second service data, thereby implementing reception of the first service data and the second service data.

In some examples, obtaining the first service data and the first information from the first data packet includes: parsing the first data packet based on a security protocol policy corresponding to the first IPsec tunnel, to obtain the first service data and the first information; and obtaining the second service data and the second information from the second data packet includes: parsing the second data packet based on the security protocol policy corresponding to the first IPsec tunnel, to obtain the second service data and the second information. Both the first data packet and the second data packet received by the second network device from the first IPsec tunnel are decrypted based on the security protocol policy corresponding to the first IPsec tunnel, to obtain the corresponding first service data, first information, second service data, and second information. A corresponding security protocol policy may be set for an IPsec tunnel through configuration, so that the security protocol policy is used when service data transmitted through the IPsec tunnel is encrypted.

S804: Send the first service data to the first target object indicated by the first information, and send the second service data to the second target object indicated by the second information.

It may be understood that the first information indicates that the first service data belongs to the first target object, and the second information indicates that the second service data comes from the second target object. In this way, a target object to which a data packet belongs can be determined by using the first information or the second information carried in the data packet, so that the second network device determines the target objects corresponding to the first service data and the second service data, and based on a determining result, sends the first service data to the target object indicated by the first information, and sends the second service data to the target object indicated by the second information, where the target object may include an operator or a service instance.

In some examples, the method may further include: obtaining, based on a third mapping mechanism, the first virtual routing domain identifier corresponding to the first information, where the first information is encapsulated into the first data packet by the first network device based on the first mapping mechanism; and obtaining, based on the fourth mapping mechanism, the second virtual routing domain identifier corresponding to the second information, where the second information is encapsulated into the second data packet by the first network device based on the first mapping mechanism, where the third mapping mechanism and the fourth mapping mechanism may be the same or different. When the corresponding first virtual routing domain identifier is obtained based on the first information, the third mapping mechanism may be used to obtain the first virtual routing domain identifier from a field for carrying the first information; and when the corresponding second virtual routing domain identifier is obtained based on the second information, the fourth mapping mechanism may be used to obtain the second virtual routing domain identifier from a field for carrying the second information. The third mapping mechanism and the fourth mapping mechanism may be the same or different, the third mapping mechanism and the first mapping mechanism may be the same or different, the fourth mapping mechanism and the second mapping mechanism may be the same or different, and a specific mapping rule may be determined through negotiation between the first network device and the second network device.

In some examples, the first data packet and the second data packet include one or more of the following fields: an extension header field, a special field, a reserved field, a TTL field, a flow label field, and a dh header field, and the first information is located in the field. When the corresponding first virtual routing domain identifier is obtained based on the first information, and the corresponding second virtual routing domain identifier is obtained based on the second information, the first virtual routing domain identifier carried in the first information and the second virtual routing domain identifier carried in the second information may be obtained from fields such as the extension header field, the special field, the reserved field, the TTL field, the flow label field, and the dh header, or may be obtained from other available fields in the data packet. This is not limited herein.

In some examples, the method may further include: transmitting, based on the first virtual routing domain identifier, the first service data to the first target object served by the second network device, where an association relationship exists between the first virtual routing domain identifier and the first target object; and transmitting, based on the second virtual routing domain identifier, the second service data to the second target object served by the second network device, where an association relationship exists between the second virtual routing domain identifier and the second target object. It may be understood that, an association relationship exists between the first virtual routing domain identifier and the first target object, and an association relationship exists between the second virtual routing domain identifier and the second target object. Therefore, based on the first virtual routing domain identifier and the association relationship between the first virtual routing domain identifier and the first target object, the first service data may be sent to the first target object served by the second network device, and based on the second virtual routing domain identifier and the association relationship between the second virtual routing domain identifier and the second target object, the second service data may be sent to the second target object served by the second network device, so that reception of the first service data and the second service data is completed.

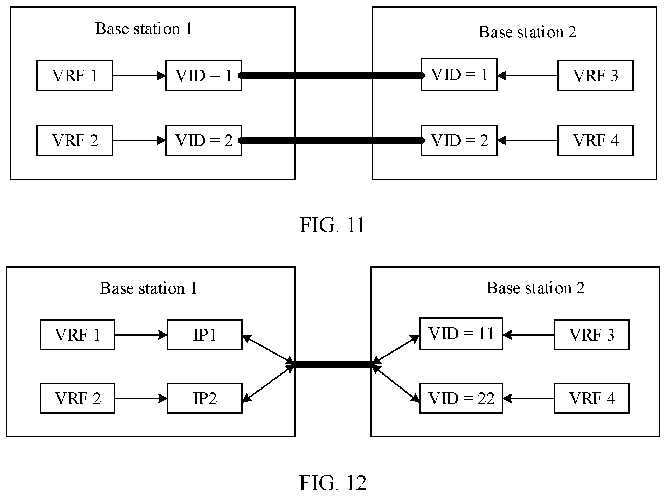

In some examples, FIG. 11 is a diagram illustrating a principle of an indication manner of a virtual routing domain according to an embodiment of this application. As shown in FIG. 11, a virtual routing domain identifier corresponding to a target object is mapped to generate a virtual local area network identifier (virtual local area network identifier, VID) parameter, and an association relationship is established between the virtual routing domain and the VID parameter. In this way, the VID parameter may be written as the virtual routing domain identifier into an available field, and indicates an operator or a service instance corresponding to service data. In some examples, a corresponding VID parameter may be carried by using an extension header, a special field, or an optional field at an inner layer or an outer layer. Because the VID parameter is bound to a virtual routing and forwarding domain VRF, VIDs corresponding to a same operator or service instance between a base station 1 and a base station 2 need to be consistent. For example, mapping may also be performed by using a next-hop extension header of Internet protocol version 6 (Internet Protocol Version 6, IPv6).

For example, between the base station 1 and the base station 2, a VID value corresponding to the VRF 1 in the base station 1 remains the same as a VID value corresponding to the VRF 3 in the base station 2, so that after service data is transmitted to the base station 2, it may be determined, based on the VID value, that the service data belongs to the VRF 3. In some examples, a mapping mechanism between the VRF 1 and the VID in the base station 1 may be the same as or different from a mapping mechanism between the VRF 3 and the VID in the base station 2. Mapping mechanisms between different VRFs and VIDs in a same base station may be the same or different. It may be understood that, based on a same principle, an existing field may be selected for mapping. For example, the existing field may include one or more of the following: a TTL field that is in a packet and that represents a VID, an options field of Internet protocol version 4 (Internet Protocol Version 4, IPv4), a flow label of IPv6, a dh header of IPv6, and the like, or may be another optional existing field. This is not limited herein.

In some examples, the first service data includes the first address information, the first address information indicates the first target object, the second service data includes the second address information, and the second address information indicates the second target object. After service data is obtained, the service data carries address information that may indicate a corresponding target object. In some examples, the first service data may include the first address information, the first address information may indicate the target address information corresponding to the first service data, the second service data may include the second address information, and the second address information may indicate the target address information corresponding to the second service data. The first target object and the second target object that correspond to the first service data and the second service data may be determined based on the target address information.

In some examples, the method further includes: transmitting, based on the first address information, the first service data to the first target object served by the second network device; and transmitting, based on the second address information, the second service data to the second target object served by the second network device. Address information may include source address information and target address information. In some examples, a target object corresponding to service data may be determined by obtaining the target address information in the address information. For example, the first target object corresponding to the first service data may be determined based on the target address information in the first address information, and the first service data is sent to the first target object; and the second target object corresponding to the second service data may be determined based on the target address information in the second address information, and the second service data is sent to the second target object, so that reception of the first service data and the second service data is completed.

In some embodiments, FIG. 12 is a diagram illustrating a principle of an indication manner of a virtual routing domain according to an embodiment of this application. As shown in FIG. 12, service data sent by a VRF 1 includes an inner address IP1 corresponding to the VRF 1, and service data sent by a VRF 2 includes an inner address IP2 corresponding to the VRF 2. After the service data is sent from a base station 1 to a base station 2, corresponding VRF domains may be determined based on different inner IP addresses. An association relationship exists between different target objects and different VRFs, and inner addresses of different target objects are different. A corresponding VRF domain may be determined based on an inner IP address.

In some embodiments, an IPsec tunnel is a data transmission path, and other similar data transmission paths are also applicable to the concept of the IPsec tunnel sharing method provided in this application. This is not limited herein.

It may be understood that an AH or ESP mode may be used to encapsulate an IPsec tunnel header before an original IP packet. When a common ESP mode is used, inner-layer data is the original IP packet, and an outer layer is an IPsec-added tunnel header.

In some embodiments, inner-layer data of a plurality of operators shares one IPsec tunnel and uses a same IPsec SA, which is IPsec tunnel sharing in the foregoing embodiment.

In some examples, a network device may be shared among a plurality of operators by using a local address of an outer-layer IKE through IPsec tunnel auto-establishment. An IPsec tunnel generation rule is any to any, and traffic is directed to the IPsec tunnel through policy-based routing. One security protocol policy is determined from security protocol policies (IPsec policies) that are automatically established by the plurality of operators, and is bound to a tunnel interface of the IPsec tunnel.

Principles of sending processing and receiving processing in this embodiment include:

Sending processing: A transmit end modifies content of a packet in plaintext (before encryption) and maps an inner VRF ID to a field x.

Receiving processing: After the packet matches an IPsec SA and is decrypted, the ID in the inner packet field x is mapped to an inner VRF.

It may be understood that the field x may be the first information in the foregoing embodiment, and the transmit end may be the first network device in the foregoing embodiment, and a receive end may be the second network device in the foregoing embodiment. Similarly, the first network device may also be used as a receive end, and the second network device may also be used as a transmit end. Further, IDs of the transmit end and the receive end need to be mapped to the VRF uniformly.

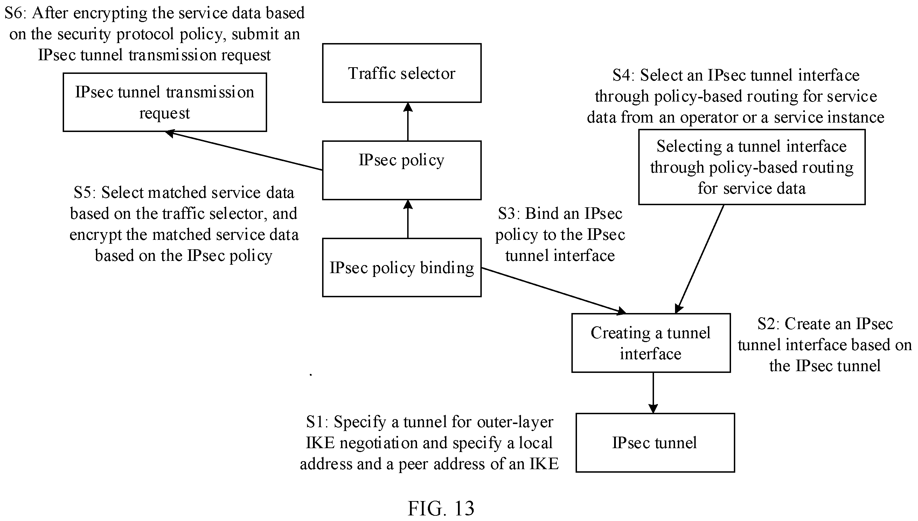

In some other examples, FIG. 13 is a detailed schematic flowchart of an IPsec tunnel sharing method according to an embodiment of this application. As shown in FIG. 13, the method may include the following steps.

S1: Specify a tunnel for outer-layer IKE negotiation and specify a local address and a peer address of an IKE.

In some examples, an IKE is first created between network devices, that is, a parameter in a first phase of IPsec tunnel negotiation, and one or more IPsec tunnels are established. A local address and a peer address at an outer layer of the IPsec tunnel are determined through negotiation between a first network device and a second network device.

S2: Create an IPsec tunnel interface based on the IPsec tunnel.

Specifically, a corresponding interface is created based on an IPsec tunnel, and different IPsec tunnels correspond to respective tunnel interfaces and are used for traffic matching of service data and encryption of the service data (specifically, the service data may be directed to the tunnel interface through routing, and then an IPsec policy is bound to the tunnel interface, to determine an encryption mode of the service data).

S3: Bind the IPsec policy to the IPsec tunnel interface.

The IPsec policy is bound to the IPsec tunnel interface (for encapsulation or encryption processing on the service data based on the IPsec policy corresponding to the IPsec tunnel when the service data is transmitted to the IPsec tunnel interface).

Based on this, a process of negotiating and establishing the IPsec tunnel between the network devices is implemented, so that the IPsec tunnel can serve a plurality of service instances, and efficiency of data transmission between the network devices is improved.

S4: Select an IPsec tunnel interface through policy-based routing for service data from an operator or a service instance.

A transmit end directs the service data to be encrypted to the IPsec tunnel interface through routing. The routing may be destination address-based routing, source address-based routing, policy-based routing, or another routing mode.

It may be understood that, during service data transmission, in a process of transmitting the service data to a tunnel interface of a first IPsec tunnel, destination address-based routing may be used, or source address-based routing may be used, or further, policy-based routing may be used. The destination address-based routing may be routing and transmitting the service data based on an address of the second network device to which the service data needs to be transmitted. The source address-based routing may be routing and transmitting the service data based on an address of the first network device that sends the service data. The policy-based routing may be based on a combination of a source address and a destination address, where a router determines whether to send the service data by using the route, and controls a sending path of the service data by using the policy-based routing, so that an objective of transmitting the service data to the corresponding first IPsec tunnel is achieved.

In some embodiments, within the network device, the service data of the operator or the service instance at an inner layer may be directed in the policy-based routing mode. The policy-based routing may direct service data of an X2/Xn user plane or signaling plane to the IPsec tunnel interface based on a combination of a source IP address and a destination IP address (SRC IP address + DST IP address), so that IPsec encryption is performed on the inter-site X2/Xn user plane or signaling plane. For the signaling plane, the SRC IP address is a local address of the X2/Xn signaling plane, and the DST IP address is an address carried by an MME/AMF to a base station through an S1/NG signaling interface. For the user plane, the SRC IP address is a local address of the X2/Xn user plane, the DST IP address is an address carried to the base station through the X2/Xn signaling interface, and an outbound interface of the policy-based routing is the tunnel interface of the inter-site direct IPsec tunnel. In this way, it is ensured that only the service data of the inter-site X2/Xn is subject to direct IPsec encryption processing.

In some embodiments, for the inter-site X2/Xn between network devices, a control plane (control plane, CP) may be established first, and a user plane (user plane, UP) is established through the CP.

S5: Select matched service data based on a traffic selector, and encrypt the matched service data based on the IPsec policy.

A TS in a second phase of IPsec negotiation is configured. The TS is used to match the service data after the service data reaches the IPsec tunnel interface.

It may be understood that a selection mode set for the traffic selector is any to any. To be specific, encryption and encapsulation may be performed on all the service data transmitted to the tunnel interface through preset routing, to obtain a corresponding data packet.

It may be understood that a key step of service data encryption is as follows: First, the service data needs to be transmitted to the IPsec tunnel interface through preset routing, then the traffic selector TS corresponding to the IPsec policy is bound to the IPsec interface, and encryption and encapsulation are performed only if the service data matches a preset rule of the TS, to obtain the data packet corresponding to the service data.

In some embodiments, in a direct IPsec auto-establishment process between the network devices, the TS uses an any-any selection rule. A corresponding IPv4 address range is 0.0.0.0 to 0.0.0.0, and a corresponding IPv6 address range is ::0 to ::0, so that one IPsec tunnel uses one IPsec SA. In this way, IPsec SA resources are saved, and efficiency of data transmission is improved.

S6: After encrypting the service data based on the foregoing security protocol policy, submit an IPsec tunnel transmission request.

In some embodiments, after a receive end receives data packet, a method for sharing an IPsec tunnel by inner packet data may include:

In a mapping process, mapping may be performed by using an inner or outer extension header, a special field, an optional field, or the like, to obtain a corresponding VRF domain. A specific method is as follows: A VID parameter of an IPSec security proposal is carried by an extension header, a special field, or an optional field. A binding relationship exists between the VID parameter and a virtual routing and forwarding domain VRF, and VIDs between a base station BTS1 and a base station BTS2 need to be consistent. For details, refer to related descriptions of FIG. 11 in the foregoing embodiment, and details are not described herein again.

In some examples, different VRF domains may be further determined based on inner IP addresses carried in different service data. For details, refer to related descriptions of FIG. 12 in the foregoing embodiment, and details are not described herein again.

An embodiment of this application provides an IPsec tunnel sharing method. An outer layer of a direct IPsec tunnel automatically established for a plurality of operators is shared, that is, a plurality of IPsec share one IKE and one IPsec tunnel. Firstly, traffic in a direct IPsec tunnel automatically established by a network device is directed through policy-based routing by using a combination of a VRF, a source IP address, and a destination IP address. Secondly, a direct IPsec SA automatically established by the network device is any to any. Finally, VRF mapping of an inner packet uses an existing field, an IP address, or an extension field to distinguish between data packets of different service instances in the same network device. In this way, a direct IPsec tunnel specification shared among the plurality of operators is increased by N times, without requiring capacity expansion of a security gateway.

It may be understood that sharing of a direct IPsec tunnel between network devices among a plurality of operators changes an IP address/route specification from N to 1, thereby reducing network planning and construction costs; multi-operator sharing changes a direct IPsec tunnel specification from 1/N to N, thereby meeting CA service requirements, without reducing the specification shared among the plurality of operators; and the operators independently plan IP networks, without the need for inter-operator communication or verification of IP planning.

It may be understood that, in this embodiment of this application, the network device supports deletion of an IPsec tunnel and modification (for example, addition or deletion) of an association relationship between an IPsec tunnel and a service instance, so that more flexible IPsec tunnel sharing can be implemented. For example, the network device may negotiate with another network device about IPsec tunnel management at any time based on an actual requirement, including on-demand addition or deletion of an IPsec tunnel, on-demand addition or deletion of an association relationship between an IPsec tunnel and a service instance, and supporting on-demand allocation of resources such as system computing, storage, and IP address resources in an on-demand adjustment manner, so as to implement more scientific resource allocation.

It should be understood that the solutions in embodiments of this application may be properly combined for use, and explanations or descriptions of terms in embodiments may be cross-referenced or explained in embodiments. This is not limited.

It should be further understood that sequence numbers of the foregoing processes do not mean execution sequences in various embodiments of this application. The execution sequences of the processes should be determined based on functions and internal logic of the processes, but should not be construed as any limitation on the implementation processes of embodiments of this application.

It may be understood that, to implement functions of any one of the foregoing embodiments, the network device (for example, the first network device or the second network device) includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device may be divided into functional modules. For example, each functional module corresponding to each function may be obtained through division, or two or more functions may be integrated into one processing module. The integrated module may be implemented in a form of hardware, or may be implemented in a form of a software functional module. It may be understood that, in embodiments of this application, division into the modules is an example, and is merely logical function division. Another division manner may be used during actual implementation.

It should be further understood that each module in the network device may be implemented in a form of software and/or hardware. This is not specifically limited. In other words, the network device is presented in a form of a functional module. Herein, the "module" may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or the functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state disk (solid state disk, SSD)), or the like.

Method or algorithm steps described in combination with embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well-known in the art. For example, the storage medium is coupled to the processor, so that the processor can read information from the storage medium or write information to the storage medium. Certainly, the storage medium may alternatively be a component of the processor. The processor and the storage medium may be located in an application-specific integrated circuit (application-specific integrated circuit, ASIC). In addition, the ASIC may be located in a network device. Certainly, the processor and the storage medium may alternatively exist as discrete components.

Based on the foregoing descriptions of implementations, a person skilled in the art may clearly understand that, for the purpose of convenient and brief description, division of the foregoing functional modules is used as an example for illustration. In actual application, the foregoing functions can be allocated to different modules and implemented based on a requirement, that is, an internal structure of an apparatus is divided into different functional modules to implement all or some of the functions described above.

## Claims

1. An IPsec tunnel sharing method, applied to a first network device, wherein the first network device provides services for a plurality of target objects, the target objects are operators or service instances, the plurality of target objects comprise a first target object and a second target object, one or more IPsec tunnels are established between the first network device and a second network device, and the method comprises:
sending a first data packet and a second data packet to the second network device through a first IPsec tunnel, wherein the first data packet belongs to the first target object, the second data packet belongs to a second different target object, the first data packet comprises first service data and first information, the first information indicates the first target object, the second data packet comprises second service data and second information, and the second information indicates the second target object, wherein
the first IPsec tunnel is one of the one or more IPsec tunnels.

2. The method according to claim 1, wherein sending the first data packet and the second data packet to the second network device through the first IPsec tunnel comprises:
separately transmitting the first service data and the second service data to a tunnel interface of the first IPsec tunnel;
separately encrypting the first service data and the second service data at the tunnel interface to obtain the first data packet and the second data packet; and
sending the first data packet and the second data packet to the second network device through the first IPsec tunnel.

3. The method according to claim 2, wherein separately transmitting the first service data and the second service data to the tunnel interface of the first IPsec tunnel comprises:
transmitting the first service data and the second service data to the tunnel interface based on a preset routing mode of inner addresses.

4. The method according to claim 3, wherein the preset routing mode of inner addresses comprises one or more of the following: destination address-based routing, source address-based routing, and policy-based routing.

5. The method according to any one of claims 2 to 4, wherein both the first service data and the second service data pass traffic selection of the tunnel interface.

6. The method according to any one of claims 2 to 5, wherein the tunnel interface comprises a traffic selector, and separately encrypting the first service data and the second service data at the tunnel interface comprises:
performing the traffic selection on the first service data and the second service data at the tunnel interface by using the traffic selector, and when the traffic selection passes, separately performing encryption processing on the first service data and the second service data.

7. The method according to claim 6, wherein performing the traffic selection on the first service data and the second service data comprises:
determining that the inner addresses corresponding to the first service data and the second service data satisfy a preset address range of the traffic selector, and determining that the traffic selection passes.

8. The method according to claim 6 or 7, wherein performing the traffic selection on the first service data and the second service data by using the traffic selector comprises:
performing the traffic selection on the first service data and the second service data based on an any-to-any selection policy by using the traffic selector, wherein
an IPv4 address range corresponding to the traffic selector is 0.0.0.0/0 to 0.0.0.0/0, and a corresponding IPv6 address range is ::0/0 to ::0/0.

9. The method according to any one of claims 2 to 8, wherein separately performing encryption processing on the first service data and the second service data at the tunnel interface comprises:
writing a first virtual routing domain identifier corresponding to the first target object into the first information, and then performing encryption processing on the first service data; and
writing a second virtual routing domain identifier corresponding to the second target object into the second information, and then performing encryption processing on the second service data.

10. The method according to claim 9, wherein
writing the virtual routing domain identifier corresponding to the first target object into the first information comprises:
writing, based on a first mapping mechanism, the first virtual routing domain identifier corresponding to the first target object into the first information; and
writing the virtual routing domain identifier corresponding to the second target object into the second information comprises:
writing, based on a second mapping mechanism, the second virtual routing domain identifier corresponding to the second target object into the second information,
wherein the first mapping mechanism and the second mapping mechanism may be the same or different.

11. The method according to claim 10, wherein the first data packet comprises a field for carrying the first information, the second data packet comprises a field for carrying the second information, and the field comprises one or more of the following: an extension header field, a special field, a reserved field, a TTL field, a flow label field, and a dh header field.

12. The method according to claim 1, wherein the first service data comprises first address information, the first address information indicates the first target object, the second service data comprises second address information, and the second address information indicates the second target object.

13. An IPsec tunnel sharing method, applied to a second network device, wherein the second network device provides services for a plurality of target objects, the target objects are operators or service instances, the plurality of target objects comprise a first target object and a second target object, one or more IPsec tunnels are established between the second network device and a first network device, and the method comprises:
receiving a first data packet and a second data packet that are sent by the first network device through a first IPsec tunnel, wherein the first data packet comprises first service data and first information, the first information indicates the first target object, the second data packet comprises second service data and second information, and the second information indicates the second target object; and
obtaining the first service data and the first information from the first data packet, and obtaining the second service data and the second information from the second data packet.

14. The method according to claim 13, wherein
obtaining the first service data and the first information from the first data packet comprises:
parsing the first data packet based on a security protocol policy corresponding to the first IPsec tunnel, to obtain the first service data and the first information; and
obtaining the second service data and the second information from the second data packet comprises:
parsing the second data packet based on the security protocol policy corresponding to the first IPsec tunnel, to obtain the second service data and the second information.

15. The method according to claim 13 or 14, wherein the method further comprises:
obtaining, based on a third mapping mechanism, a first virtual routing domain identifier corresponding to the first information, wherein the first information is encapsulated into the first data packet by the first network device based on the first mapping mechanism; and
obtaining, based on the fourth mapping mechanism, the second virtual routing domain identifier corresponding to the second information, wherein the second information is encapsulated into the second data packet by the first network device based on the first mapping mechanism,
wherein the third mapping mechanism and the fourth mapping mechanism may be the same or different.

16. The method according to claim 15, wherein the first data packet and the second data packet comprise one or more of the following fields: an extension header field, a special field, a reserved field, a TTL field, a flow label field, and a dh header field, and the first information is located in the field.

17. The method according to any one of claims 13 to 16, wherein the method further comprises:
transmitting, based on the first virtual routing domain identifier, the first service data to the first target object served by the second network device, wherein an association relationship exists between the first virtual routing domain identifier and the first target object; and
transmitting, based on the second virtual routing domain identifier, the second service data to the second target object served by the second network device, wherein an association relationship exists between the second virtual routing domain identifier and the second target object.

18. The method according to claim 13, wherein the first service data comprises first address information, the first address information indicates the first target object, the second service data comprises second address information, and the second address information indicates the second target object.

19. The method according to claim 18, wherein the method further comprises:
transmitting, based on the first address information, the first service data to the first target object served by the second network device; and
transmitting, based on the second address information, the second service data to the second target object served by the second network device.

20. A communication system, wherein the communication system comprises a first network device and a second network device, the first network device is configured to implement the method according to any one of claims 1 to 12, and the second network device is configured to implement the method according to any one of claims 13 to 19.

21. A network device, wherein the network device comprises:
a transceiver, configured to send and receive signals;
a memory, configured to store computer program instructions; and
a processor, configured to execute the computer program instructions, to support the network device in implementing the method according to any one of claims 1 to 12 or any one of claims 13 to 19.

22. A computer-readable storage medium, wherein the computer-readable storage medium stores computer program instructions, and when the computer program instructions are executed by a processing circuit, the method according to any one of claims 1 to 12 or any one of claims 13 to 19 is implemented.

23. A computer program product comprising instructions, wherein when the computer program product runs on a computer, the computer is enabled to perform the method according to any one of claims 1 to 12 or any one of claims 13 to 19.

24. A chip system, wherein the chip system comprises a processing circuit and a storage medium, the storage medium stores computer program instructions, and when the computer program instructions are executed by the processing circuit, the method according to any one of claims 1 to 12 or any one of claims 13 to 19 is implemented.
